# FASCICULE DE BREVET EUROPEEN

(11) **EP 1 239 648 B1**
(45) Date de publication et mention de la délivrance du brevet: **13.10.2004**
(21) Numéro de dépôt: 02360078.6
(22) Date de dépôt: 05.03.2002
(51) Int. Cl.: H04L 29/12

(54) **Procédé de translation d'adresse entre des systèmes de transmission filaire et des systèmes de transmission sans fil**
Verfahren zur Adressübersetzung zwischen drahtgebundeten und drahtlosen Systemen
Method of address translation between wireline and wireless systems

(30) Priorité: 07.03.2001 FR 0103115
(43) Date de publication de la demande: 11.09.2002
(73) Titulaire: HAGER ELECTRO S.A., F-67210 Obernai (FR)
(72) Inventeur: Bernard, Patrick, 67118 Geispolsheim (FR); Gosse, Christian, 67870 Bischoffsheim (FR)
(74) Mandataire: Nuss, Pierre

(56) Documents cités:
- EP-A- 1 035 702
- WO-A-00/72520
- WO-A-01/10091

## Description

La présente invention concerne le domaine des équipements électriques domestiques, notamment des dispositifs de commande à distance de moyens d'actionnement de ces équipements électriques domestiques, et a pour objet un procédé de translation d'adresse entre des systèmes de transmission filaire et des systèmes de transmission sans fil.

Les automatismes couramment utilisés dans le bâtiment mettent en oeuvre des dispositifs de commande sous forme de capteurs et d'actionneurs. Les capteurs mesurent des valeurs comme des températures ou détectent des évènements comme un appui sur un bouton-poussoir et transmettent des signaux correspondants aux actionneurs qui exécutent les commandes transmises par les capteurs.

Actuellement, la transmission des signaux de commande est effectuée par l'intermédiaire de systèmes filaires du type connu par le standard européen EIB (European Installation Bus) et de systèmes sans fil.

Dans le standard EIB, la communication est basée sur trois éléments, à savoir l'adresse physique, les signaux qui permettent de transmettre le type et les ordres et les adresses de groupe.

L'adresse physique, affectée à chaque produit, permet de communiquer individuellement avec celui-ci pour le télécharger ou le paramétrer.

Les signaux permettent de transmettre le type et les ordres des capteurs aux d'actionneurs. Ainsi, par exemple, lorsqu'un capteur commande une lampe, il émet un signal de type marche/arrêt avec la valeur marche et, lorsque l'actionneur reçoit le même signal, il allume la lampe.

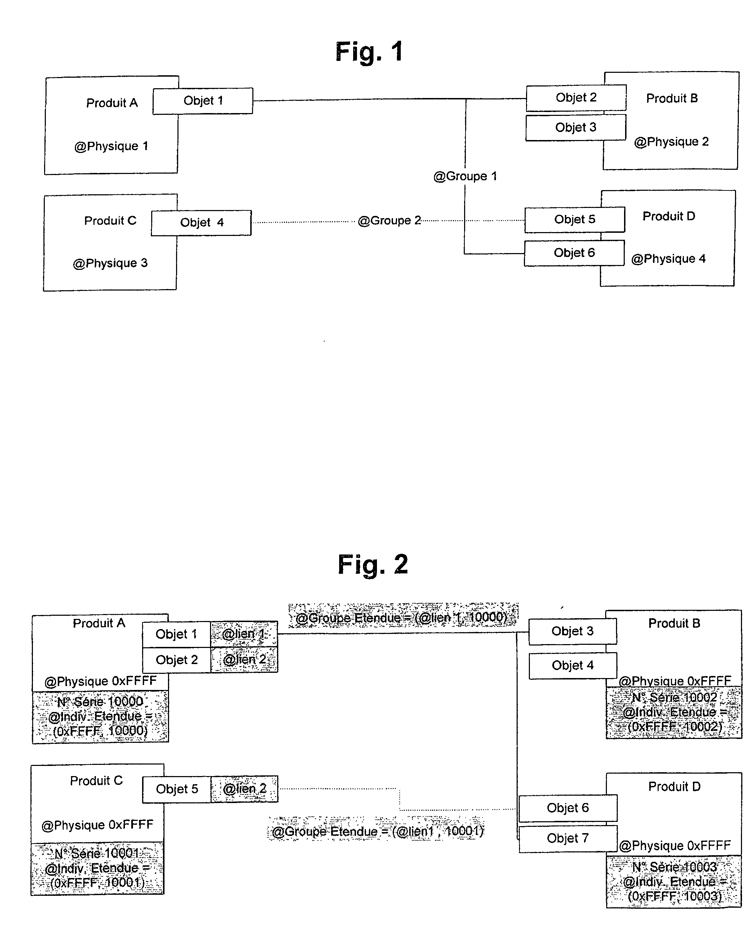

Les adresses de groupe permettent de lier les signaux des capteurs et des actionneurs. Lorsqu'un capteur commande, par exemple, un volet en montée, il émet un signal de type montée/descente avec la valeur Montée sur l'adresse de groupe 1, comme indiqué sur la figure 1 des dessins annexés. Tous les actionneurs qui ont un signal de montée/descente associé à l'adresse de groupe vont déclencher une montée des volets. Dans le schéma de principe représenté à la figure 1 les signaux émis et reçus sont désignés par le terme "Objet".

Dans le cas des systèmes de transmission sans fil, le type de communication précité doit être restreint par domaine, du fait qu'un signal d'un système risque d'être relié à un signal d'un système voisin, alors que dans le système de type EIB une adresse de domaine, fournie par un serveur d'adresses de domaine, est utilisée.

Les systèmes de transmission sans fil utilisent un adressage étendu, qui repose sur l'utilisation d'un numéro de série des produits. Ce numéro de série est unique et est affecté en usine à chaque produit. Il est ainsi possible de s'affranchir d'un adressage individuel, du fait que le numéro de série peut être utilisé comme une adresse unique.

Par ailleurs, WO-A-00 72 520 et WO-A-01 10 091 décrivent des dispositifs de communication radio pouvant traiter deux types de communications, à savoir les communications de voix, du type téléphone portable, et les communications de données. Les communications de voix ou de données entre le dispositif appelant et le dispositif appelé sont établies à l'aide de numéros de téléphone.

En présence d'une communication de données, les signaux transmis comportent une information supplémentaire, à savoir l'adresse du dispositif appelé. Cette adresse est nécessaire dans le protocole de communication. Les numéros de téléphone sont uniques et affectés définitivement alors que les adresses du dispositif appelé ne sont pas affectés définitivement, car les communications de données sont peu nombreuses. Ces adresses sont affectées par une station centrale pour chaque communication de données à établir.

A un instant donné, une station doit donc établir une relation entre le numéro de téléphone et l'adresse du dispositif appelé, temporairement affecté pour une communication de données. Il n'existe donc pas à proprement parler de traduction d'adresse, le destinataire étant toujours identifié par son numéro de téléphone, que celui-ci soit radio ou filaire et l'identifiant n'est pas transformé selon que le destinataire soit radio ou filaire.

Il n'existe donc pas de translation d'adresse effectuant une traduction ni transformation effective de l'identifiant lors du passage d'un réseau filaire vers un réseau radio et inversement.

On connaît aussi, par EP-A-1 035 702 un procédé de sécurisation de communications effectuées à partir de dispositifs mobiles. Ce procédé repose sur l'utilisation d'adresses sécurisées et d'un mécanisme d'authentification et d'encryptage/décryptage. Lorsque la communication est sécurisée, les adresses des dispositifs mobiles sont translatées vers des adresses sécurisées.

Ce procédé ne met, cependant, pas en oeuvre des formats différents d'adresses, respectivement pour les dispositifs sans fil et pour les dispositifs filaires.

A titre d'exemple, et comme le montre la figure 2 des dessins annexés, une communication sans fil est basée sur les trois principes suivants :
- Pour l'adressage étendu individuel, le numéro de série est simplement complété par une adresse individuelle par défaut. Il est ainsi possible d'avoir une adresse unique par produit, permettant de communiquer individuellement avec celui-ci pour le télécharger ou le paramétrer.
- Les signaux qui transmettent le type et les ordres des capteurs aux actionneurs. Ainsi, lorsqu'un capteur commande, par exemple, une lampe, il émet un signal de type marche/arrêt avec une valeur marche et l'actionneur correspondant reçoit le même signal avec la même valeur et allume la lampe.
- L'adresse de lien, qui permet, en combinaison avec le numéro de série, de créer une adresse de groupe étendue. L'adresse de lien est un "numéro" affecté en usine à chaque signal d'émission, numéro qui permet de différencier lesdits signaux d'émission. Il en résulte que l'adresse de groupe étendue est donc unique pour chaque objet en émission quelle que soit l'installation et permet ainsi de s'affranchir d'une adresse de domaine.

Il n'existe actuellement pas de lien entre les systèmes filaires et sans fil.

La présente invention a pour but de pallier ces inconvénients en proposant un procédé de translation d'adresse entre des systèmes de transmission filaire et des systèmes de transmission sans fil permettant d'assurer un échange d'adresses étendues de groupe ou individuelle à des adresses de groupe ou individuelle, lors de la connexion d'une ou de plusieurs installations sans fil à une installation filaire suivant le standard EIB.

A cet effet, le procédé de translation d'adresse entre des systèmes de transmission filaire et des systèmes de transmission sans fil, dans lequel est effectué, par l'intermédiaire d'au moins un coupleur, une association entre une adresse de groupe ou individuelle émanant d'un système de transmission filaire avec une adresse étendue de groupe ou individuelle d'un système de transmission sans fil, au moyen d'un numéro d'ordre de coupleur, qui est combiné à un numéro d'ordre qui résulte de la translation d'un numéro de série d'une adresse physique étendue du système sans fil pour former une partie non fixe d'une adresse physique du système filaire.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
les figures 1 et 2 sont des schémas représentant les principes d'adressage respectivement pour un système filaire et pour un système sans fil ;
la figure 3 est un schéma de principe correspondant au procédé conforme à l'invention, et
les figures 4 à 7 sont des schémas de principe d'exemples de codage.

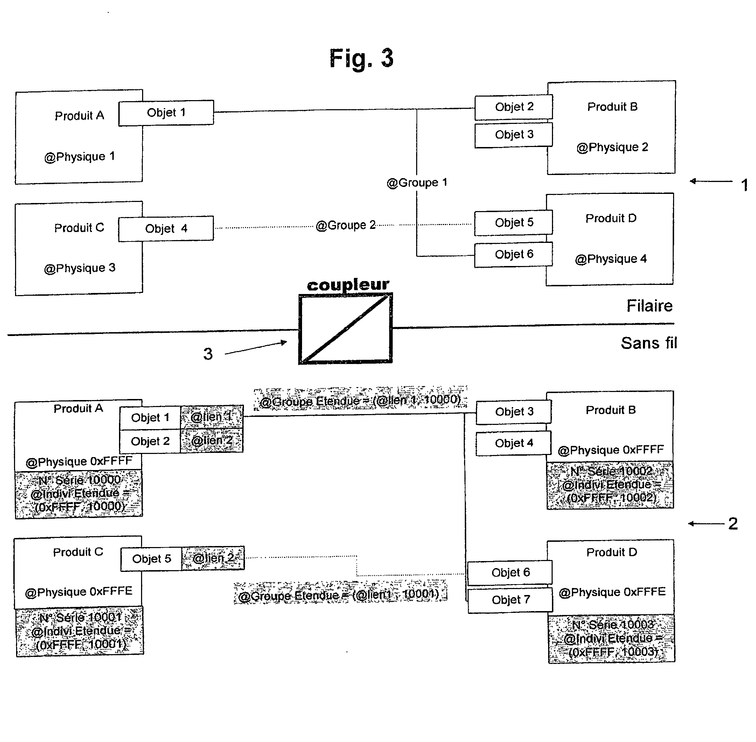

Conformément à l'invention et comme le montre, plus particulièrement, à titre d'exemple, la figure 3 des dessins annexés, le procédé de translation d'adresse entre des systèmes de transmission filaire 1 et des systèmes de transmission sans fil 2 consiste essentiellement à effectuer, par l'intermédiaire d'au moins un coupleur 3, une association entre une adresse de groupe ou individuelle émanant d'un système de transmission filaire 1 avec une adresse étendue de groupe ou individuelle d'un système de transmission sans fil 2, au moyen d'un numéro d'ordre. Ce procédé permet d'interfacer le protocole sans fil avec le bus du type standard EIB filaire.

Selon une caractéristique de l'invention, les numéros d'ordre sont associés dans le coupleur 3 à des numéros de série des produits sans fil, qui sont connus du coupleur 3. Il en résulte qu'il est possible de réaliser une relation entre un numéro de série du système de transmission sans fil 2 et une adresse du système de transmission filaire 1.

Conformément à une autre caractéristique de l'invention, pour la mise en oeuvre de plusieurs coupleurs dans une installation de translation, le procédé peut comporter une étape supplémentaire d'enregistrement d'un numéro de coupleur. Une telle phase de procédé permet d'obtenir une relation bijective "adresse étendue sans fil/adresse type standard EIB", chaque coupleur 3 disposant d'une liste d'associations numéro d'ordre/numéro de série.

La mise en oeuvre du procédé conforme à l'invention peut s'effectuer de deux manières, à savoir, celle selon laquelle l'utilisation des adresses du système sans fil 2 doit être effectuée dans un système filaire 1 et celle selon laquelle les adresses du système filaire 1 doivent être utilisées dans un système sans fil 2.

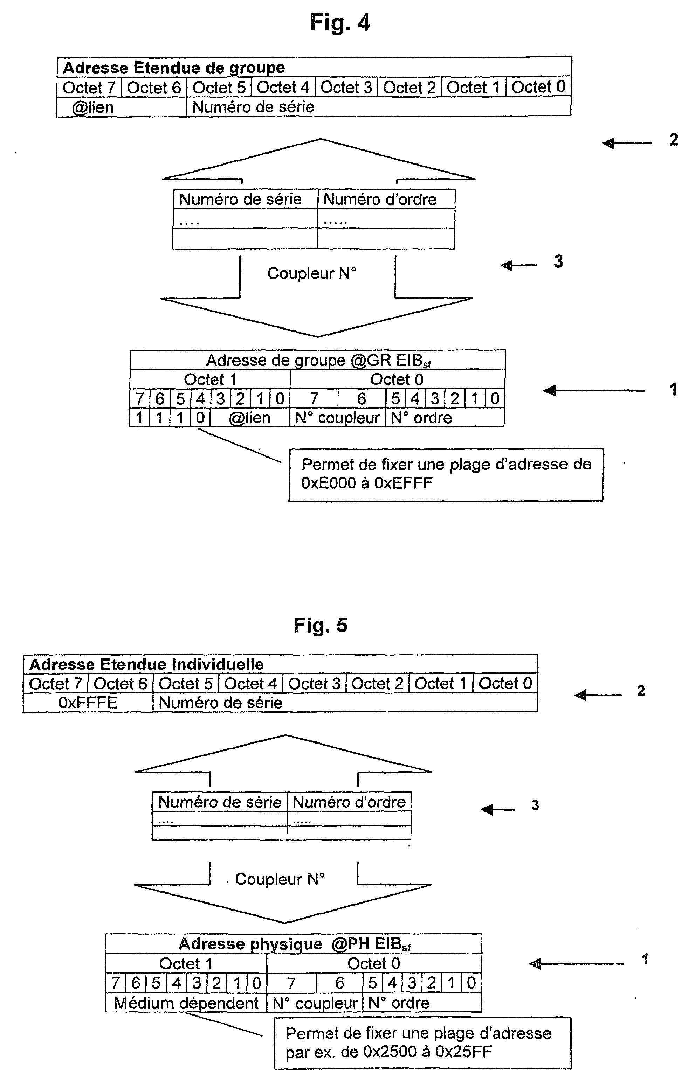

Dans le cas d'utilisation des adresses suivant le système sans fil 2 dans un système filaire 1 (figures 4 et 5), les adresses translatées issues du système sans fil 2 seront dans une plage d'adresse déterminée et réservée, par exemple les adresses de groupe de 0xE000 à 0xEFFF et les adresses physiques de 0x2500 à 0x25FF.

Comme le montre la figure 4, et selon une caractéristique de l'invention, une adresse de lien d'une adresse de groupe étendue du système sans fil 2, combinée au numéro de coupleur 3 et à un numéro d'ordre, qui résulte de la translation d'un numéro de série contenu dans une adresse de groupe étendue, est reprise dans une partie non fixe d'une adresse de groupe du système filaire 1.

Selon une autre caractéristique de l'invention et comme le montre la figure 5, le numéro de coupleur 3 est combiné à un numéro d'ordre qui résulte de la translation d'un numéro de série d'une adresse physique étendue du système sans fil 2 pour former une partie non fixe d'une adresse physique du système filaire 1.

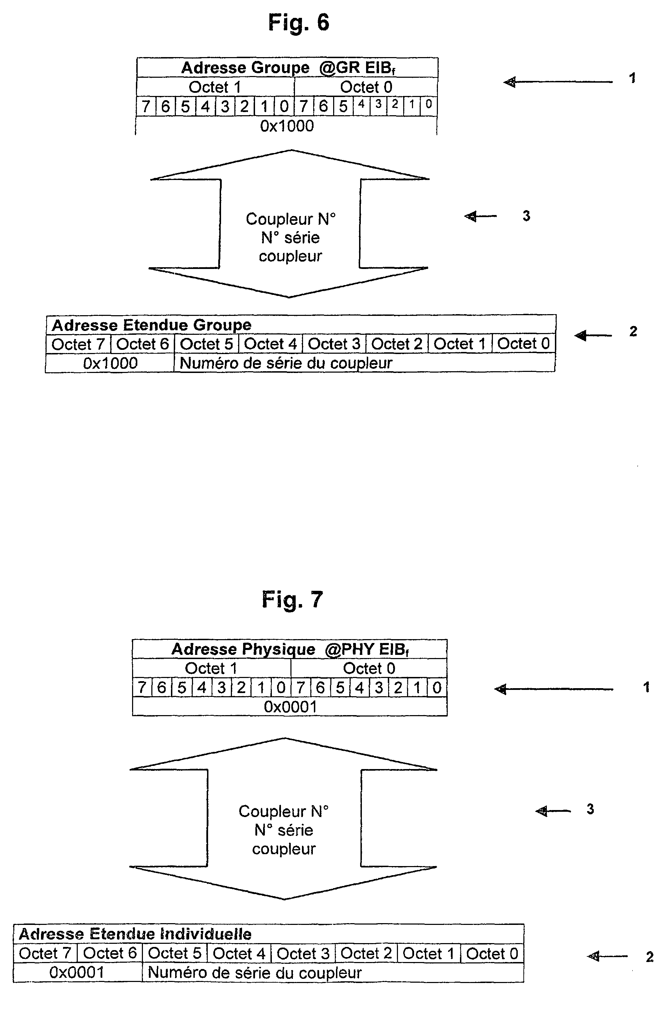

Le cas d'utilisation des adresses suivant le système filaire 1 dans un système sans fil 2 (figures 6 et 7) s'applique à toutes les adresses de groupe et physiques du système filaire 1 qui ne se trouvent pas dans la plage d'adresses réservée, à savoir, par exemple, les adresses de groupe de 0xE000 à 0xEFFF et les adresses physiques 0x2500 à 0x25FF.

A cet effet, conformément à une autre caractéristique de l'invention (figure 6), le numéro de série du coupleur 3 est combiné à une adresse de lien du système sans fil 2, qui est égale à une adresse de groupe du type standard EIB, pour composer une adresse étendue résultante du système filaire 1. Une translation dans ce sens est très simple et une translation en sens inverse se base sur le fait que l'adresse étendue de groupe comprend le numéro de série du coupleur 3.

Selon une autre caractéristique de l'invention et comme le montre la figure 7 des dessins annexés, le numéro de série du coupleur 3 et une adresse physique provenant du système filaire 1 de type standard EIB sont combinés pour composer une adresse physique étendue résultante du système sans fil 2. Cette translation est très simple et la translation en sens inverse est assurée en se basant sur le fait que l'adresse étendue de groupe comprend le numéro de série du coupleur 3.

Grâce à l'invention, il est possible de réaliser un échange d'adresses entre une ou plusieurs installations sans fil et une installation filaire du type standard EIB.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention comme défini par les revendications.

## Revendications

1. Procédé de translation d'adresse entre des systèmes de transmission filaire et des systèmes de transmission sans fil, dans lequel est effectué, par l'intermédiaire d'au moins un coupleur (3), une association entre une adresse de groupe ou individuelle émanant d'un système de transmission filaire (1) avec une adresse étendue de groupe ou individuelle d'un système de transmission sans fil (2), au moyen d'un numéro d'ordre de coupleur (3), qui est combiné à un numéro d'ordre qui résulte de la translation d'un numéro de série d'une adresse physique étendue du système sans fil (2) pour former une partie non fixe d'une adresse physique du système filaire (1).

2. Procédé, suivant la revendication 1, **caractérisé en ce que** les numéros d'ordre sont associés dans le coupleur (3) à des numéros de série des produits sans fil, qui sont connus du coupleur (3).

3. Procédé, suivant la revendication 1, **caractérisé en ce qu'**il comporte une étape supplémentaire d'enregistrement d'un numéro de coupleur (3).

4. Procédé, suivant l'une quelconque des revendications 1 à 3, **caractérisé en ce qu'**une adresse de lien d'une adresse de groupe étendue du système sans fil (2), combinée au numéro de coupleur (3) et au numéro d'ordre, qui résulte de la translation du numéro de série contenu dans l'adresse de groupe étendue, est reprise dans une partie non fixe d'une adresse de groupe du système filaire (1).

5. Procédé, suivant l'une quelconque des revendications 1 à 3, **caractérisé en ce que** le numéro de série du coupleur (3) est combiné à une adresse de lien du système sans fil (2), qui est égale à une adresse de groupe du type standard EIB, pour composer une adresse étendue résultante du système filaire (1).

6. Procédé, suivant l'une quelconque des revendications 1 à 3, **caractérisé en ce que** le numéro de série du coupleur (3) et une adresse physique provenant du système filaire (1) de type standard EIB sont combinés pour composer une adresse physique étendue résultante du système sans fil (2).

## Patentansprüche

1. Verfahren zur Adressübersetzung zwischen drahtgebundenen und drahtlosen Systemen, bei dem mit Hilfe wenigstens eines Kopplers (3) eine Verbindung zwischen einer Gruppen- oder Einzeladresse, die aus einem drahtgebundenen Übertragungssystem (1) kommt, mit einer erweiterten Gruppen- oder Einzeladresse eines drahtlosen Übertragungssystems (2) hergestellt wird, und zwar mit Hilfe einer Ordnungszahl des Kopplers (3), die an eine Ordnungsnummer gebunden ist, die aus der Übersetzung einer Seriennummer einer physikalischen Adresse aus dem drahtlosen System (2) resultiert, um einen variablen Teil einer physikalischen Adresse des drahtgebundenen Systems (1) zu bilden.

2. Verfahren nach Anspruch 1, **dadurch gekennzeichnet, dass** die Ordnungsnummern im Koppler (3) mit Seriennummern der drahtlosen Produkte, welche dem Koppler (3) bekannt sind, verbunden werden.

3. Verfahren nach Anspruch 1, **dadurch gekennzeichnet, dass** als zusätzlicher Schritt die Registrierung einer Nummer des Kupplers (3) enthalten ist.

4. Verfahren nach wenigstens einem der Ansprüche 1 bis 3, **dadurch gekennzeichnet, dass** eine Verbindungsadresse einer Gruppenadresse aus dem drahtlosen System (2), welche mit der Nummer des Kopplers (3) und mit der aus der Übersetzung der in der erweiterten Adressengruppe enthaltenen Seriennummer resultierenden Ordnungsnummer kombiniert wird, in einem variablen Teil einer Gruppenadresse des drahtgebundenen Systems (1) übernommen wird.

5. Verfahren nach wenigstens einem der Ansprüche 1 bis 3, **dadurch gekennzeichnet, dass** die Seriennummer des Kopplers (3) mit einer Verbindungsadresse des drahtlosen Systems (2) kombiniert wird, welche einer Gruppenadresse vom Standardtyp EIB entspricht, um eine aus dem drahtgebundenen System (1) resultierende erweiterte Adresse zusammenzustellen.

6. Verfahren nach einem der Ansprüche 1 bis 3, **dadurch gekennzeichnet, dass** die Seriennummer des Kopplers (3) und eine physikalische, aus dem drahtgebundenen System (1) vom Standardtyp EIB stammende Adresse kombiniert werden, um eine aus dem drahtlosen System (2) resultierende erweiterte physikalische Adresse zu bilden.

## Claims

1. Method of address translation between wireline and wireless systems in which an association is made by means of at least one coupler (3) between a group or individual address emanating from a wireline transmission system (1) with an extended group or individual address of a wireless transmission system (2), by means of an order number of the coupler (3), which is combined with an order number which results from the translation of a serial number of an extended physical address of the wireless system (2) in order to form a non-fixed part of a physical address of the wireline system (1).

2. Method according to claim 1 **characterised in that** the order numbers are associated in the coupler (3) with the serial numbers of the wireless products which are known by the coupler (3).

3. Method according to claim 1 **characterised in that** it comprises a supplementary stage of registering a coupler number (3).

4. Method according to any of claims 1 to 3 **characterised in that** a link address of an extended group address of the wireless system (2), combined with the coupler number (3) and with the order number, which results from the translation of the serial number contained in the extended group address, is repeated in a non-fixed part of a group address of the wireline system (1).

5. Method according to any of claims 1 to 3 **characterised in that** the serial number of the coupler (3) is combined with a link address of the wireless system (2), which is equal to a group address of the EIB (European Installation Bus) standard type in order to make up an extended end address of the wireline system (1).

6. Method according to any of claims 1 to 3 **characterised in that** the serial number of the coupler (3) and a physical address coming from the wireline system (1) of the EIB standard type are combined to make up an extended physical end address of the wireless system (2).
